# EUROPEAN PATENT APPLICATION

(11) **EP 4 817 814 A1**
(43) Date of publication of application: **07.10.2026**
(21) Application number: 26169520.9
(22) Date of filing: 31.03.2026
(51) Int. Cl.: B25J 11/00, B25J 15/00, B25J 9/10, B25J 9/12, B25J 19/00

(54) **ROBOT MACHINING APPARATUS, ROBOT ARM, AND MACHINING METHOD USING THE ROBOT MACHINING APPARATUS**

(30) Priority: 03.04.2025 JP 2025061950
(71) Applicant: Sugino Machine Limited, Namerikawa City, Toyama 936-8577 (JP)
(72) Inventor: MIWA, Naoya, Namerikawa City, Toyama, 9368577 (JP); KAWAMORI, Yoshiteru, Namerikawa City, Toyama, 9368577 (JP); MORIGUCHI, Takuya, Namerikawa City, Toyama, 9368577 (JP)
(74) Representative: Global IP Europe Patentanwaltskanzlei

(57) **Abstract**

A robot machining apparatus (10), including: a multi-joint articulated robot arm (11) including a plurality of joints (11-J6), and a braking mechanism (16) capable of braking rotation of at least one of the plurality of joints (J1-J6) while the robot arm is servo-on; an end effector (55) disposed at a distal end of the robot arm (11), the end effector (55) including a rotatable spindle (71) capable of mounting a tool (72); and a feed table (69) configured to feed the spindle (71).

## Description

### BACKGROUND

### 1. Technical Field

The present invention relates to a robot machining apparatus, a robot arm, and a machining method using the robot machining apparatus.

### 2. Description of the Background

An assembly mounted to an end flange of an articulated robot is known (see, for example, JP 2024-504278 A). The assembly is attached to the end flange of the articulated robot. The assembly includes a parallel robot and a servo spindle.

### BRIEF SUMMARY

When machining is performed using a multi-joint robot, machining accuracy may deteriorate due to vibration of a distal end of a robot arm caused by machining reaction forces.

An object of the present invention is to improve machining accuracy when machining is performed using a multi-joint robot.

A first aspect of the present invention provides a robot machining apparatus, including:
a multi-joint articulated robot arm including
   a plurality of joints, and
   a braking mechanism capable of braking rotation of at least one of the plurality of joints while the robot arm is servo-on;
an end effector disposed at a distal end of the robot arm, the end effector including a rotatable spindle capable of mounting a tool; and
a feed table configured to feed the spindle.

A second aspect of the present invention provides a multi-joint articulated robot arm, including:
braking mechanisms configured to respectively brake between two links connected to each of a plurality of joints.

A third aspect of the present invention provides a machining method using a multi-joint articulated robot arm having an end effector, the machining method including:
stopping a position of the end effector by the robot arm;
braking joints of the robot arm;
rotating a spindle by the end effector for a feed table to feed the spindle to machine a workpiece; and
releasing braking of the joints of the robot arm after machining is completed.

Machining includes, for example, cutting, grinding, and rolling. Cutting includes, for example, drilling, tapping, milling, end-milling, and chamfering. Grinding includes, for example, grinding cutting and drilling using a grinding wheel. The workpiece includes, for example, metal, fiber-reinforced plastics, and laminated materials. The fiber-reinforced plastics include, for example, carbon fiber reinforced plastics and glass fiber reinforced plastics. The laminated materials include, for example, materials in which metal and fiber-reinforced plastics are laminated.

The robot arm may have, for example, four to six axes.

Preferably, the braking mechanisms are disposed at respective joints. Alternatively, the braking mechanisms may be disposed only at joints that are likely to rotate during machining. The braking mechanisms may be disposed only at a terminal joint (for example, a sixth axis in a six-axis serial link robot), or at the terminal joint and a joint adjacent thereto.

Preferably, electromagnetic brakes are excitation-actuated electromagnetic brakes.

The robot arm may include angular velocity sensors configured to directly measure angular velocities between two links sandwiching each joint. The angular velocity sensors include, for example, rotary encoders and resolvers.

Preferably, all joints of the robot arm are braked during machining using the robot machining apparatus. Alternatively, only joints that are likely to rotate may be braked.

The feed table may be disposed on the end effector. The feed table includes, for example, a ram, a spindle base, and a slide table (X-slider). The feed table may move in a spindle direction. The feed table may move in a direction perpendicular to the spindle direction.

The ram may be fed in the spindle direction. The spindle base may be fed in a direction (X direction) perpendicular to the spindle direction.

The feed table may be disposed on a frame. The frame may be disposed on a floor surface. The robot arm may be disposed on an arm base (feed table). In this case, the spindle is fed integrally with the robot arm.

The end effector may include a slide unit. The slide unit may include an X-axis guide extending in a direction perpendicular to the spindle. The slide unit may include an X-slider reciprocating along the X-axis guide.

The end effector may include a single-axis machining unit. The single-axis machining unit may include a Z-axis guide and a ram fed along the Z-axis guide. The single-axis machining unit may include a body. The body supports the Z-axis guide and the ram. The single-axis machining unit may be disposed on an X-slider. In this case, the X-slider and the body may be integrated.

Alternatively, the end effector may be composed only of the single-axis machining unit.

The end effector may include a spindle head. The spindle head, which is disposed on the slide unit, is fed in an X-axis direction. The spindle head supports the spindle. The slide unit feeds the spindle in the X-axis direction.

The robot machining apparatus, the robot arm, and the machining method according to the present invention improve machining accuracy when machining is performed using a multi-joint robot.

### BRIEF DESCRIPTION OF DRAWINGS

FIG. 1 shows a robot machining apparatus according to a first embodiment.
FIG. 2 is a sectional view taken along line II-II in FIG. 1.
FIG. 3 is an enlarged view of portion III in FIG. 1.
FIG. 4 is a flowchart showing a machining method according to the first embodiment.
FIG. 5 shows a robot machining apparatus according to a second embodiment.
FIG. 6 shows an end effector according to a third embodiment.
FIG. 7 shows a robot machining apparatus according to a fourth embodiment.

### DETAILED DESCRIPTION

### First Embodiment

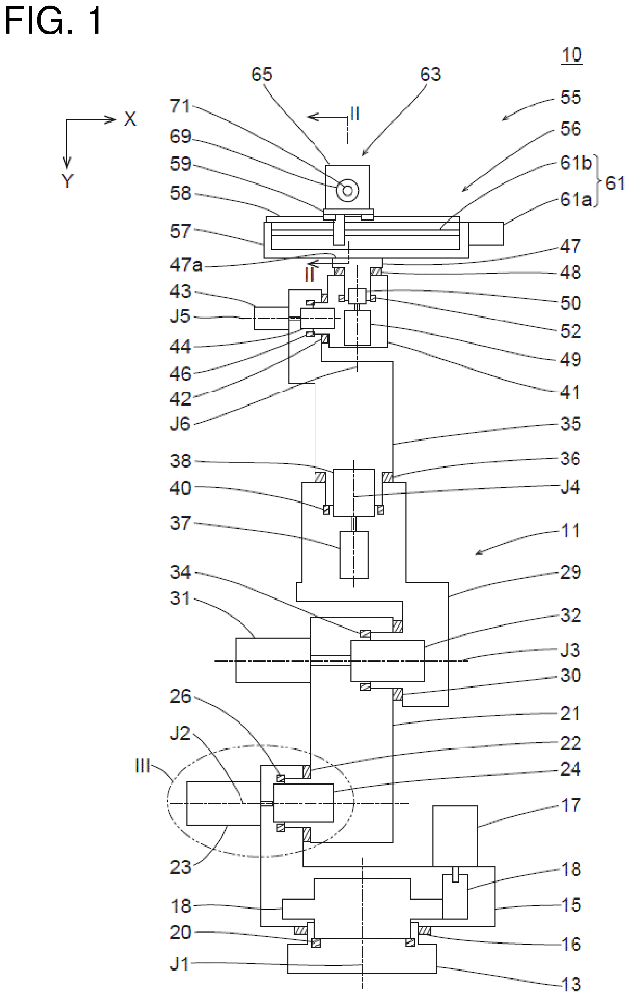

As illustrated in FIG. 1, a robot machining apparatus 10 according to the present embodiment includes a robot arm 11 and an end effector 55.

The robot arm 11 is a six-axis vertically articulated robot arm. The robot arm 11 includes first to sixth axes (first to sixth joints) J1, J2, J3, J4, J5, and J6. The robot arm 11 includes a base 13 and first to sixth links 15, 21, 29, 35, 41, and 47. The robot arm 11 includes first to sixth motors 17, 23, 31, 37, 43, and 49; first to sixth reduction gears 18, 24, 32, 38, 44, and 50; first to sixth brakes (braking mechanisms) 16, 22, 30, 36, 42, and 48; and first to sixth encoders 20, 26, 34, 40, 46, and 52.

The first link 15, which is disposed on the base 13, rotates about the first axis J1. The second link 21, which is disposed on the first link 15, rotates about the second axis J2. The third link 29, which is disposed on the second link 21, rotates about the third axis J3. The fourth link 35, which is disposed on the third link 29, rotates about the fourth axis J4. The fifth link 41, which is disposed on the fourth link 35, rotates about the fifth axis J5. The sixth link 47, which is disposed on the fifth link 41, rotates about the sixth axis J6. The sixth link 47 includes a mounting flange 47a at a distal end.

The first to sixth motors 17, 23, 31, 37, 43, and 49 are disposed in the vicinity of the first to sixth axes J1 to J6, respectively. The first to sixth motors 17, 23, 31, 37, 43, and 49 are respectively connected to the first to sixth reduction gears 18, 24, 32, 38, 44, and 50.

The first motor 17 rotates the first link 15 relative to the base 13 about the first axis J1. The second motor 23 rotates the second link 21 relative to the first link 15 about the second axis J2. The third motor 31 rotates the third link 29 relative to the second link 21 about the third axis J3. The fourth motor 37 rotates the fourth link 35 relative to the third link 29 about the fourth axis J4. The fifth motor 43 rotates the fifth link 41 relative to the fourth link 35 about the fifth axis J5. The sixth motor 49 rotates the sixth link 47 relative to the fifth link 41 about the sixth axis J6.

The first brake 16 is disposed between the base 13 and the first link 15. The first brake 16 directly brakes rotation of the first link 15 relative to the base 13.

The second brake 22 is disposed between the first link 15 and the second link 21. The second brake 22 directly brakes rotation of the second link 21 relative to the first link 15.

The third brake 30 is disposed between the second link 21 and the third link 29. The third brake 30 directly brakes rotation of the second link 21 and the third link 29.

The fourth brake 36 is disposed between the third link 29 and the fourth link 35. The fourth brake 36 directly brakes rotation of the third link 29 and the fourth link 35.

The fifth brake 42 is disposed between the fourth link 35 and the fifth link 41. The fifth brake 42 directly brakes rotation of the fourth link 35 and the fifth link 41.

The sixth brake 48 is disposed between the fifth link 41 and the sixth link 47. The sixth brake 48 directly brakes rotation of the fifth link 41 and the sixth link 47.

The first to sixth encoders 20, 26, 34, 40, 46, and 52 directly measure rotational speeds of the first to sixth axes J1 to J6, respectively.

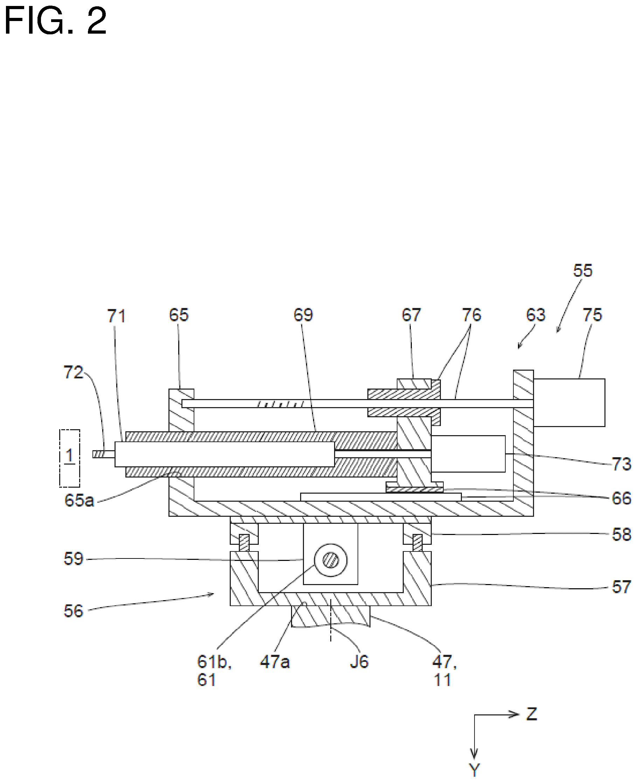

As illustrated in FIGS. 1 and 2, the end effector 55 includes a slide unit 56 and a single-axis machining unit 63.

The slide unit 56 includes an X-frame 57, an X-guide 58, an X-drive unit 61, and an X-slider (feed table) 59.

The X-frame 57, which has a box-like shape, extends in an X-axis direction. The X-frame 57 is fastened to the mounting flange 47a. The X-axis extends in a direction perpendicular to the sixth axis J6.

The X-guide 58, which is disposed on the X-frame 57, extends in the X-axis direction.

The X-slider 59 is disposed on the X-guide 58. The X-slider 59, which is guided by the X-guide 58, reciprocates in the X-axis direction.

The X-drive unit 61 includes an X-motor 61a and an X-feed screw 61b. The X-motor 61a is disposed on the X-frame 57. The X-feed screw 61b, which is disposed on the X-frame 57, is connected to the X-motor 61a. The X-feed screw 61b is, for example, a ball screw. The X-motor 61a rotates the X-feed screw 61b to feed the X-slider 59.

The single-axis machining unit 63 includes a body 65, a Z-guide 66, a Z-slider 67, a ram (feed table) 69, a spindle motor 73, a spindle 71, a Z-motor 75, and a Z-feed screw 76.

The body 65 is fastened to the X-slider 59. The body 65, which has a box-like shape, extends in a Z direction. The Z direction is orthogonal to each of the sixth axis J6 and the X-axis. The Z direction is a spindle direction. The body 65 includes a ram hole 65a. The ram hole 65a extends along the spindle 71.

The Z-guide 66 is disposed on the body 65. The Z-guide 66 extends in the Z direction.

The Z-slider 67 is disposed on the Z-guide 66. The Z-slider 67 is guided by the Z-guide 66 to reciprocate in the Z direction.

The ram 69 has a right cylindrical shape. The ram 69, which is fastened to the Z-slider 67, extends in the Z direction. The ram 69 passes through the ram hole 65a. The ram 69 is guided by the Z-guide 66 and the ram hole 65a.

The spindle 71 is rotatably supported by the ram 69. The spindle 71 extends in the Z direction. A tool 72 is mounted on the spindle 71.

The spindle motor 73 is disposed on the Z-slider 67. The spindle motor 73, which is connected to the spindle 71, rotates the spindle 71.

The Z-motor 75 is disposed on the body 65. The Z-feed screw 76, which extends in the Z direction, is rotatably disposed on the body 65. The Z-feed screw 76, which is connected to the Z-motor 75, feeds the Z-slider 67.

The slide unit 56 may be omitted. In this case, the body 65 is fastened to the mounting flange 47a.

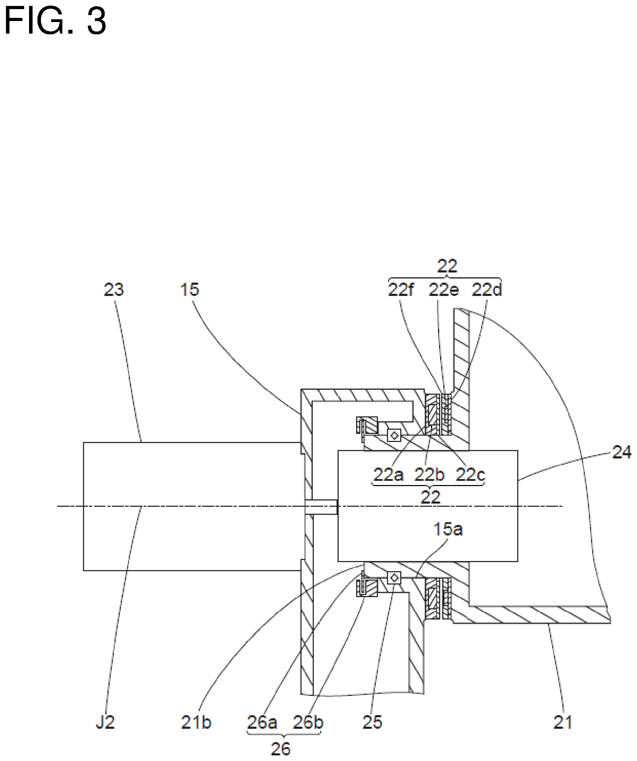

FIG. 3 illustrates a detailed structure of the second joint J2. FIG. 3 is a sectional view taken along a plane passing through the second axis J2. Structures of the first joint J1 and the third to sixth joints J3 to J6 are substantially the same as that of the second joint J2.

As illustrated in FIG. 3, the second joint J2 includes a second bearing 25. The second bearing 25 is, for example, a cross-roller bearing. The first link 15 includes a second boss hole 15a. The second boss hole 15a extends along the second axis J2.

The second link 21 includes a second shaft 21b. The second shaft 21b is a hollow shaft. The second shaft 21b is inserted into the second boss hole 15a. The second shaft 21b is supported in the second boss hole 15a via the second bearing 25. The second reduction gear 24 is inserted inside the second shaft 21b. The second motor 23 is disposed on the first link 15. The second motor 23 is connected to the second reduction gear 24.

The second brake 22 is an excitation-actuated electromagnetic brake. The second brake 22 includes a stator 22a, a coil 22b, a lining 22c, an armature hub 22d, an elastic body 22e, and an armature 22f. Each component of the second brake 22 is disposed around the second axis J2.

The stator 22a is fastened to the first link 15. The coil 22b is disposed on the stator 22a. The lining 22c is disposed on a distal end surface of the stator 22a. The distal end surface of the stator 22a faces the second link 21.

The armature hub 22d is fastened to the second link 21. The armature 22f, which is disposed on the armature hub 22d, reciprocates in a direction of the second axis J2. The armature 22f faces the lining 22c. The elastic body 22e is disposed between the armature hub 22d and the armature 22f. The elastic body 22e urges the armature 22f toward the armature hub 22d.

When the coil 22b is energized, the coil 22b is excited to attract the armature 22f. As a result, the armature 22f comes into contact with the lining 22c, thereby suppressing rotation between the first link 15 and the second link 21.

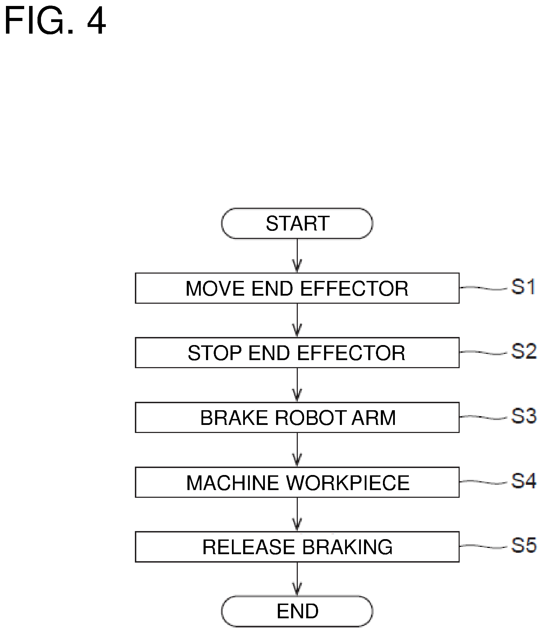

A machining method according to the present embodiment will be described with reference to FIG. 4.

In step S1, the robot arm 11 moves the end effector 55. Then, the tool 72 is positioned to face a workpiece 1 (see FIG. 2).

In step S2, the robot arm 11 stops. This also stops the position of the end effector 55.

In step S3, the robot arm 11 is braked by the first to sixth brakes 16, 22, 30, 36, 42, and 48. At this time, the robot arm 11 remains in a servo-on state.

In step S4, the end effector 55 rotates the spindle 71, and feeds the spindle 71 to machine the workpiece 1. After machining is completed, the process proceeds to step S5.

In step S5, the first to sixth brakes 16, 22, 30, 36, 42, and 48 release braking of the first to sixth joints J1 to J6, respectively.

Details of step S4 in a case where drilling is performed will be described with reference to FIG. 2. First, the spindle motor 73 rotates the spindle 71. The X-motor 61a moves the spindle 71 to a predetermined position in an X direction. Then, the Z-motor 75 feeds the ram 69 in a Z direction. The tool 72 comes into contact with a workpiece 1 to perform drilling. When a predetermined depth is reached, the Z-motor 75 retracts the ram 69. Thereafter, the spindle motor 73 stops the spindle 71.

Next, details of step S4 in a case where milling is performed will be described. First, the spindle motor 73 rotates the spindle 71. Then, the Z-motor 75 feeds the ram 69 in the Z direction. When the tool 72 comes into contact with the workpiece 1, cutting is started. Subsequently, the X-motor 61a feeds the X-slider 59 in the X direction. When a machining length reaches a predetermined length, the Z-motor 75 retracts the ram 69. Thereafter, the spindle motor 73 stops the spindle 71.

The first to sixth joints J1 to J6 have backlash. According to conventional techniques, when a tool comes into contact with a workpiece and cutting is started, the end effector receives a cutting reaction force. At this time, the cutting reaction force applied to the end effector causes angles of the first to sixth joints J1 to J6 to change abruptly. This causes positional deviation of the end effector. In addition, the first to sixth motors 17, 23, 31, 37, 43, and 49 attempt to restore angles of the first to sixth axes J1 to J6. This changes the position of the end effector during cutting, and deteriorates cutting accuracy (for example, dimensional accuracy and machined surface roughness).

According to the robot machining method of the present embodiment, before the end effector 55 starts cutting, the first to sixth brakes 16, 22, 30, 36, 42, and 48 brake rotation of the first to sixth joints J1 to J6 in step S3. Accordingly, when the end effector 55 performs cutting in step S4, deformation of the robot arm 11 is suppressed. This suppresses displacement of the position of the end effector 55 during cutting, and improves cutting accuracy.

After machining is completed, the first to sixth brakes 16, 22, 30, 36, 42, and 48 release braking of rotation of the first to sixth joints J1 to J6 in step S5. Accordingly, the robot arm 11 can freely change its posture.

The first to sixth brakes 16, 22, 30, 36, 42, and 48 brake links adjacent to the first to sixth joints J1 to J6 with respect to each other. Accordingly, even if the first to sixth reduction gears 18, 24, 32, 38, 44, and 50 have backlash, links adjacent to the first to sixth joints J1 to J6 do not idle while being braked.

The first to sixth brakes 16, 22, 30, 36, 42, and 48 are excitation-actuated electromagnetic brakes. When the first to sixth brakes 16, 22, 30, 36, 42, and 48 are not excited, the first to sixth joints J1 to J6 can freely rotate.

While the robot arm 11 is in motion, a power interruption or power line disconnection to the first to sixth brakes 16, 22, 30, 36, 42, and 48 may occur. In this case, the first to sixth joints J1 to J6 are not braked, and the robot arm 11 can continue its motion. This suppresses failure of the robot arm 11.

Through steps S3 to S5, the robot arm 11 remains servo-on. Accordingly, the robot arm 11 can temporarily stop during execution of an operation program and cause the end effector 55 to perform cutting in step S4, and can resume the operation program after execution of step S5.

The end effector 55 can feed the spindle 71 in the X direction and the Z direction. Accordingly, the end effector 55 can perform milling in addition to drilling and tapping.

### Second Embodiment

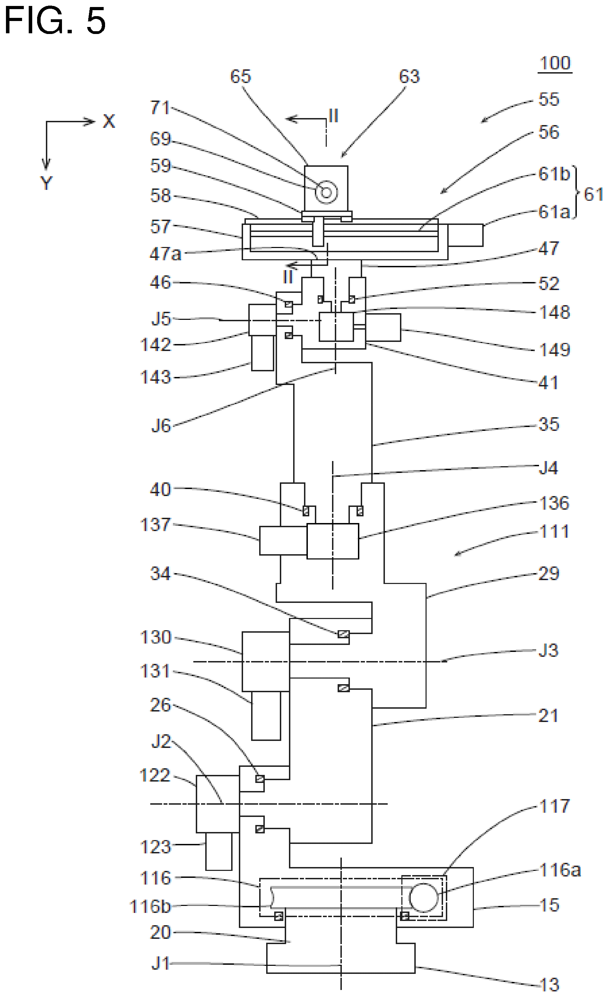

As illustrated in FIG. 5, a robot machining apparatus 100 according to the present embodiment includes a robot arm 111 and the end effector 55. The robot arm 111 includes first to sixth worm reduction gears (braking mechanisms) 116, 122, 130, 136, 142, and 148 instead of the first to sixth brakes 16, 22, 30, 36, 42, and 48. In addition, the robot arm 111 includes first to sixth motors 117, 123, 131, 137, 143, and 149 instead of the first to sixth motors 17, 23, 31, 37, 43, and 49. Other configurations of the robot arm 111 are substantially the same as those of the robot arm 11 of the first embodiment.

The first to sixth worm reduction gears 116, 122, 130, 136, 142, and 148 are respectively connected to the first to sixth motors 117, 123, 131, 137, 143, and 149.

The first worm reduction gear 116 is disposed on the first link 15. The first worm reduction gear 116 includes a first worm 116a and a first worm wheel 116b. The first worm 116a is connected to the first motor 117. The first worm wheel 116b, which is connected to the base 13, meshes with the first worm 116a. The first worm reduction gear 116 decelerates power of the first motor 117 to rotate the first link 15 relative to the base 13. The first worm reduction gear 116 brakes rotation of the first link 15 relative to the base 13.

The second worm reduction gear 122 is disposed on the first link 15. The second worm reduction gear 122 decelerates power of the second motor 123 and transmits the decelerated power to the second link 21. The second worm reduction gear 122 brakes rotation of the second link 21 relative to the first link 15.

The third worm reduction gear 130 is disposed on the second link 21. The third worm reduction gear 130 decelerates power of the third motor 131 and transmits the decelerated power to the third link 29. The third worm reduction gear 130 brakes rotation of the third link 29 relative to the second link 21.

The fourth worm reduction gear 136 is disposed on the third link 29. The fourth worm reduction gear 136 decelerates power of the fourth motor 137 and transmits the decelerated power to the fourth link 35. The fourth worm reduction gear 136 brakes rotation of the fourth link 35 relative to the third link 29.

The fifth worm reduction gear 142 is disposed on the fourth link 35. The fifth worm reduction gear 142 decelerates power of the fifth motor 143 and transmits the decelerated power to the fifth link 41. The fifth worm reduction gear 142 brakes rotation of the fifth link 41 relative to the fourth link 35.

The sixth worm reduction gear 148 is disposed on the fifth link 41. The sixth worm reduction gear 148 decelerates power of the sixth motor 149 and transmits the decelerated power to the sixth link 47. The sixth worm reduction gear 148 brakes rotation of the sixth link 47 relative to the fifth link 41.

Structures of the second to sixth worm reduction gears 122, 130, 136, 142, and 148 are substantially the same as that of the first worm reduction gear 116.

According to the present embodiment, as the braking mechanisms are the first to sixth worm reduction gears 116, 122, 130, 136, 142, and 148, the first to sixth motors 117, 123, 131, 137, 143, and 149 can rotate the first to sixth joints J1 to J6. In addition, rotation of the first to sixth joints J1 to J6 due to machining reaction forces acting on the end effector 55 is suppressed.

As the first to sixth worm reduction gears 116, 122, 130, 136, 142, and 148 also serve as reduction gears for the first to sixth joints J1 to J6, the structure of the robot arm 111 can be simplified.

### Third Embodiment

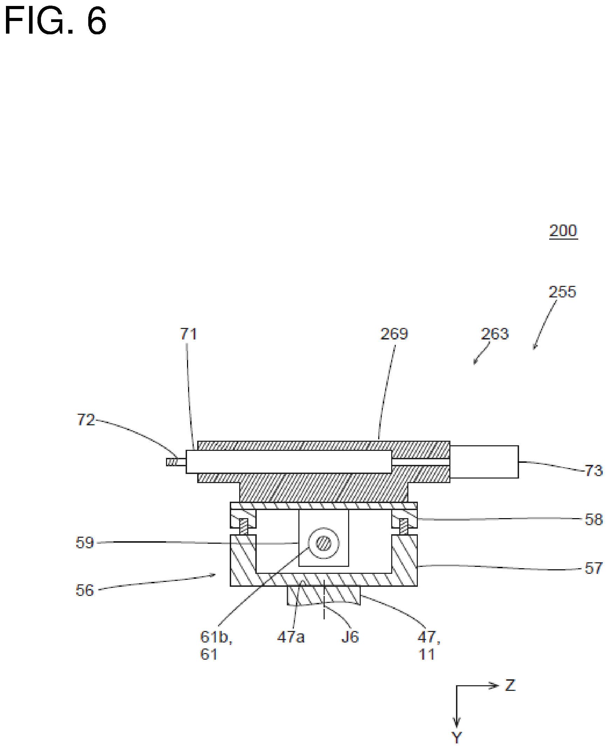

As illustrated in FIG. 6, a robot machining apparatus 200 according to the present embodiment includes an end effector 255 instead of the end effector 55 of the first embodiment. Other configurations of the robot machining apparatus 200 are substantially the same as those of the robot machining apparatus 10 of the first embodiment.

The end effector 255 includes the slide unit 56 and a spindle unit 263. The spindle unit 263 includes a spindle head 269, the spindle 71, and the spindle motor 73. The spindle head 269 is fastened to the X-slider 59. The spindle head 269 rotatably supports the spindle 71. The spindle 71 extends in a Z direction. The spindle motor 73 is disposed on the spindle head 269. The spindle motor 73 is connected to the spindle 71. The spindle motor 73 rotates the spindle 71.

According to the robot machining apparatus 200 of the present embodiment, the spindle 71 is fed in the X direction by the X-slider 59. Accordingly, the robot machining apparatus 200 can perform milling and end-milling.

### Fourth Embodiment

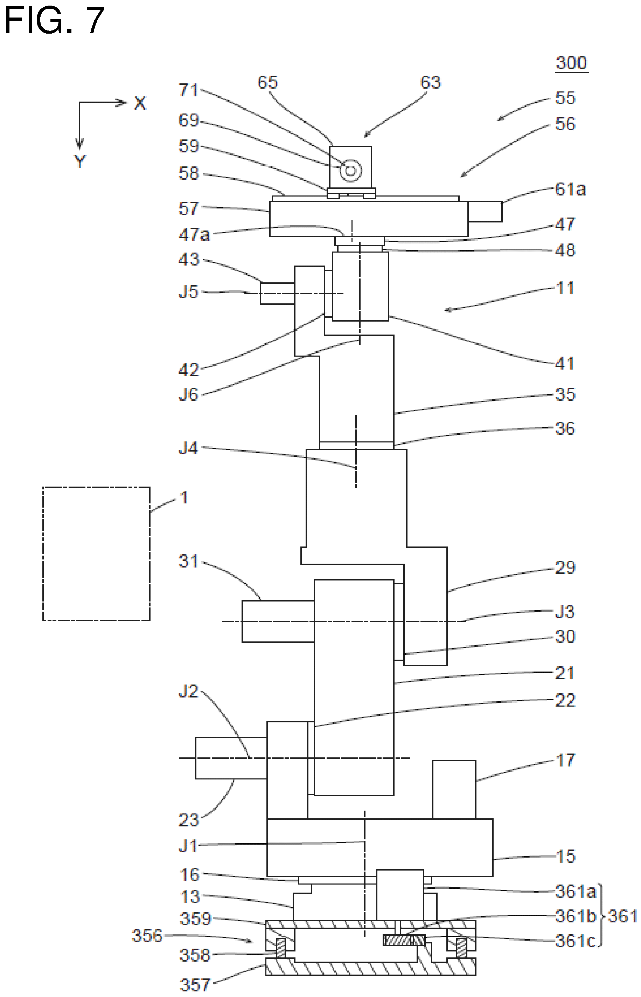

As illustrated in FIG. 7, a robot machining apparatus 300 according to the present embodiment includes a traveling unit 356, the robot arm 11, and the end effector 55. The end effector 55 is disposed on the sixth link 47. The traveling unit 356 in FIG. 7 is illustrated as a sectional view in an XY plane.

The traveling unit 356 includes a frame 357, an arm traveling guide 358, an arm base (feed table) 359, and a traveling drive unit 361. The frame 357 is installed on a floor surface. The frame 357 extends in a Z direction (a direction perpendicular to the plane of the drawing). The arm traveling guide 358, which is disposed on the frame 357, extends in the Z direction. The arm base 359, which is disposed on the arm traveling guide 358, is guided by the arm traveling guide 358 to reciprocate in the Z direction. The base 13 is fastened to the arm base 359.

The traveling drive unit 361 includes a traveling motor 361a, a pinion 361b, and a rack 361c. The traveling motor 361a is disposed on the arm base 359. The rack 361c, which extends in the Z direction, is disposed on the frame 357. The pinion 361b is connected to the traveling motor 361a. The pinion 361b meshes with the rack 361c.

The slide unit 56 may be omitted.

The robot arm 11 swings the slide unit 56. It is difficult to extremely increase a length of the slide unit 56 in the X direction. According to the robot machining apparatus 10 of the first embodiment, a width that can be machined at one time is limited to a width of the slide unit 56.

According to the robot machining apparatus 300 of the present embodiment, the traveling unit 356 is extendable within a range permitted by an installation space. With the first to sixth joints J1 to J6 of the robot arm 11 being braked, the arm base 359 can feed the spindle 71 in the X direction. Accordingly, the robot machining apparatus 300 can machine a workpiece 1 elongated in a horizontal direction (the Z direction in FIG. 7) over a long horizontal range.

As the robot arm 11 has six axes, a posture of the end effector 55 can be freely changed. The robot arm 11 can change the posture of the end effector 55 such that the X axis extends in a vertical direction. In this state, the traveling unit 356 is stopped and the slide unit 56 feeds the spindle 71. Accordingly, the robot machining apparatus 300 can also machine portions having a short length in a vertical direction.

The present invention is not limited to the embodiments described above, and various modifications can be made without departing from the spirit of the present invention. All technical matters included in the technical ideas described in the claims are included in the scope of the present invention. Although the embodiments described above show preferred examples, those skilled in the art can realize various alternatives, modifications, variations, or improvements based on the disclosure of the present specification, and such alternatives, modifications, variations, or improvements are included in the technical scope defined by the appended claims.

### Reference Signs List

10, 100, 200, 300 Robot machining apparatus
11, 111 Robot arm
16, 22, 30, 36, 42, 48 Brake (Braking mechanism)
55, 255 End effector
59 X-slider (Feed table)
69 Ram (Feed table)
116, 122, 130, 136, 142, 148 Worm reduction gear (braking mechanism)
359 Arm base (Feed table)

## Claims

1. A robot machining apparatus (10, 100, 200, 300), comprising:
a multi-joint articulated robot arm (11) including
a plurality of joints (J1-J6), and
a braking mechanism (16, 22, 30, 36, 42, 48, 116, 122, 130, 136, 142, 148) capable of braking rotation of at least one of the plurality of joints (J1-J6) while the robot arm is servo-on;
an end effector (55, 255) disposed at a distal end of the robot arm (11), the end effector (55, 255) including a rotatable spindle (71) capable of mounting a tool (72); and
a feed table (69, 59, 359) configured to feed the spindle (71).

2. The robot machining apparatus (10) according to claim 1, wherein the robot arm (11) is a vertically articulated robot arm.

3. The robot machining apparatus (10, 100, 200) according to claim 1 or 2, wherein
the end effector (55, 255) includes a feed guide (58, 66), and
the feed table (69, 59) is disposed on the feed guide (58, 66) and is fed along the feed guide (58, 66).

4. The robot machining apparatus (300) according to claim 1 or 2, further comprising:
an arm traveling guide (358) configured to hold the feed table (359),
wherein the feed table (359) supports the robot arm (11) and is fed along the arm traveling guide (358).

5. The robot machining apparatus (10, 100) according to claim 1 or 2, wherein
the feed guide (66) extends in a direction (Z) in which the spindle (71) extends.

6. The robot machining apparatus (10, 200, 300) according to any one of claims 1 to 5, wherein
the braking mechanism (16, 22, 30, 36, 42, 48, 116, 122, 130, 136, 142, 148) is a brake (16, 22, 30, 36, 42, 48) configured to brake between two links connected to each of the joints (J1-J6).

7. The robot machining apparatus (10, 200, 300) according to claim 6, wherein
the brake (16, 22, 30, 36, 42, 48) is an electromagnetic brake.

8. The robot machining apparatus (100) according to any one of claims 1 to 5, wherein
the robot arm (11) includes motors (117, 123, 131, 137, 143, 149) configured to drive the respective joints (J1-J6), and
the braking mechanism (16, 22, 30, 36, 42, 48, 116, 122, 130, 136, 142, 148) is a worm reduction gear (116, 122, 130, 136, 142, 148) connected to the motors (117, 123, 131, 137, 143, 149).

9. The robot machining apparatus (10, 200, 300) according to any one of claims 1 to 8, wherein
the braking mechanism (16, 22, 30, 36, 42, 48, 116, 122, 130, 136, 142, 148) is capable of braking rotation of only a terminal joint (J6) among the plurality of joints (J1-J6).

10. A multi-joint articulated robot arm (11, 111), comprising:
braking mechanisms (16, 22, 30, 36, 42, 48, 116, 122, 130, 136, 142, 148) configured to respectively brake between two links (15, 21, 29, 35, 41, 47) connected to each of a plurality of joints (J1-J6).

11. The robot arm (11) according to claim 10, wherein
the braking mechanisms (16, 22, 30, 36, 42, 48, 116, 122, 130, 136, 142, 148) are brakes (16, 22, 30, 36, 42, 48) configured to brake between two links (13, 15, 21, 29, 35, 41, 47) connected to the joints (J1, J2, J3, J4, J6).

12. A machining method using a multi-joint articulated robot arm (11, 111) having an end effector (55, 155, 255), the machining method comprising:
stopping a position of the end effector (55, 155, 255) by the robot arm (11, 111);
braking joints (J1, J2, J3, J4, J6) of the robot arm (11, 111);
rotating a spindle (71) by the end effector (55, 155, 255) for a feed table (59, 69, 359) to feed the spindle (71) to machine a workpiece (1); and
releasing braking of the joints (J1, J2, J3, J4, J6) of the robot arm (11, 111) after machining is completed.

13. The machining method according to claim 12, further comprising:
braking the joints of the robot arm (11) while the robot (11) arm remains servo-on.
